# EUROPEAN PATENT APPLICATION

(11) **EP 4 443 372 A1**
(43) Date of publication of application: **09.10.2024**
(21) Application number: 24168427.3
(22) Date of filing: 04.04.2024
(51) Int. Cl.: G06Q 30/0601, G06Q 20/32, G06Q 20/40

(54) **SYSTEMS INVOLVING MOBILE DEVICES AND/OR PLATFORM AGNOSTIC INFRASTRUCTURE FEATURES FOR IN-BRANCH AUTHENTICATION AND/OR AUTHORIZATION AND METHODS OF USE THEREOF**

(30) Priority: 06.04.2023 US 202318131796
(71) Applicant: Capital One Services, LLC, McLean, Virginia 22102 (US)
(72) Inventor: JIH, Yvonne, McLean (US); GOWDA, Arjun Appaji, McLean (US); OH, Brian J., McLean (US); MANN, Matthew P., McLean (US)
(74) Representative: Boult Wade Tennant LLP

(57) **Abstract**

Systems and methods involving platform agnostic infrastructure for in-branch authentication and authorization, e.g., for customers and/or transactions, are disclosed. In one embodiment, an exemplary method may include initiating, upon an account access attempt, an authentication-authorization session based on account information, receiving a transaction request from an app running on a customer computing device, updating the session data of the current authentication/ authorization session with the transaction request, determining a transaction risk level based on session data of current and/or prior session(s), initiating an authentication procedures based on transaction information, selecting an authentication mechanism from a library based on the authentication procedures, utilizing the authentication mechanism to authenticate the user according to the authentication procedure(s), enabling the app, upon authentication, to proceed to perform the transaction, and/or concluding the session and/or updating the session data with the one or more authentication procedures and/or transaction details of the completed transaction.

## Description

### FIELD OF TECHNOLOGY

The present disclosure generally relates to improved computing components and devices, improved computer-based platforms or systems, and improved computing methods configured for one or more novel technological implementations involving authentication and/or authorization of activities at a physical location.

### BACKGROUND OF TECHNOLOGY

A computer network platform or system may include a computing device such as one or more mobile computing devices, a group of computers (e.g., clients, servers, computing clusters, etc.) and other computing hardware components that are linked and communicate via software architecture, communication applications, or software applications involving computing/mobile devices, electronic communications, data processing, and/or account management features and functionality associated with activities or transactions that customers wish to engage in with providers, such as goods and services providers.

### OVERVIEW OF DESCRIBED SUBJECT MATTER

In some embodiments, the disclosed technology provides various exemplary systems, methods and associated technical solutions involving mobile devices and/or platform-agnostic infrastructure utilized for authenticating customers and authorizing transactions at branch locations. When implemented, the disclosed technology may prevent fraud that may be attempted both by customers conducting transactions at a branch location as well as by employees working at the branch. Here, for example, one illustrative computer-implemented method may include steps such as:
initiating, upon an account access attempt, an authentication-authorization session based on account information associated with the user;
receiving a transaction request from an app running on a customer computing device;
updating the session data of the current authentication-authorization session with the transaction request;
determining a transaction risk level based on session data of current and/or prior session(s);
initiating one or more authentication procedure(s) based on transaction information;
selecting an authentication mechanism from a library based on the authentication procedure(s);
utilizing the authentication mechanism to authenticate the user according to the authentication procedure(s);
enabling the app, upon authentication, to proceed to perform the transaction; and/or
concluding the session and/or updating the session data with the one or more authentication procedures and/or transaction details of the completed transaction.

In some embodiments, the present disclosure also provides exemplary technically improved computer-based systems, computer-implemented methods, and computer-readable media, including media implemented with or involving one or more software applications, whether resident on computer devices or platforms, provided for download via a server and/or executed in connection with at least one network such as at a location associated with a goods or services provider, that include or involves features, functionality, computing components and/or steps consistent with those set forth herein.

### BRIEF DESCRIPTION OF THE DRAWINGS

Various embodiments of the present disclosure can be further explained with reference to the attached drawings, wherein like structures are referred to by like numerals throughout the several views. The drawings shown are not necessarily to scale, with emphasis instead generally being placed upon illustrating the principles of the present disclosure. Therefore, specific structural and functional details disclosed herein are not to be interpreted as limiting, but merely as a representative basis for teaching one skilled in the art to variously employ one or more illustrative embodiments.
FIG. 1 is a block diagram of an exemplary system and/or platform illustrating aspects of mobile device and/or platform-agnostic infrastructure as utilized for authenticating customers and/or authorizing transactions, in accordance with certain embodiments of the present disclosure.
FIG. 2 is a diagram illustrating aspects of an exemplary mobile device showing system-level and GUI-related interface features, in accordance with certain embodiments of the present disclosure.
FIG. 3A is a series of exemplary graphical user interfaces (GUIs) displayed on a customer's device in connection with the authentication and/or authorization features and functionality set forth herein, in accordance with certain embodiments of the present disclosure.
FIGs. 3B-3C represent a flow diagram illustrating an exemplary process flow consistent with the authentication and/or authorization features and functionality set forth herein, in accordance with certain embodiments of the present disclosure.
FIG. 4 is another flow diagram illustrating an exemplary process flow consistent with the authentication and/or authorization features and functionality set forth herein, in accordance with certain embodiments of the present disclosure.
FIG. 5 is a flowchart illustrating an exemplary process related to providing authentication and/or authorization features and functionality, in accordance with certain embodiments of the present disclosure.
FIG. 6 is a block diagram depicting an exemplary computer-based system and/or platform, in accordance with certain embodiments of the present disclosure.
FIG. 7 is a block diagram depicting another exemplary computer-based system and/or platform, in accordance with certain embodiments of the present disclosure.
FIGs. 8 and 9 are diagrams illustrating two exemplary implementations of cloud computing architecture/aspects with respect to which the disclosed technology may be specifically configured to operate, in accordance with certain embodiments of the present disclosure.

### DETAILED DESCRIPTION

Various detailed embodiments of the present disclosure, taken in conjunction with the accompanying figures, are disclosed herein; however, it is to be understood that the disclosed embodiments are merely illustrative. In addition, each of the examples given in connection with the various embodiments of the present disclosure is intended to be illustrative, and not restrictive.

Throughout the specification, the following terms take the meanings explicitly associated herein, unless the context clearly dictates otherwise. The phrases "in one embodiment" and "in some embodiments" as used herein do not necessarily refer to the same embodiment(s), though it may. Furthermore, the phrases "in another embodiment" and "in some other embodiments" as used herein do not necessarily refer to a different embodiment, although it may. Thus, as described below, various embodiments may be readily combined, without departing from the scope or spirit of the present disclosure.

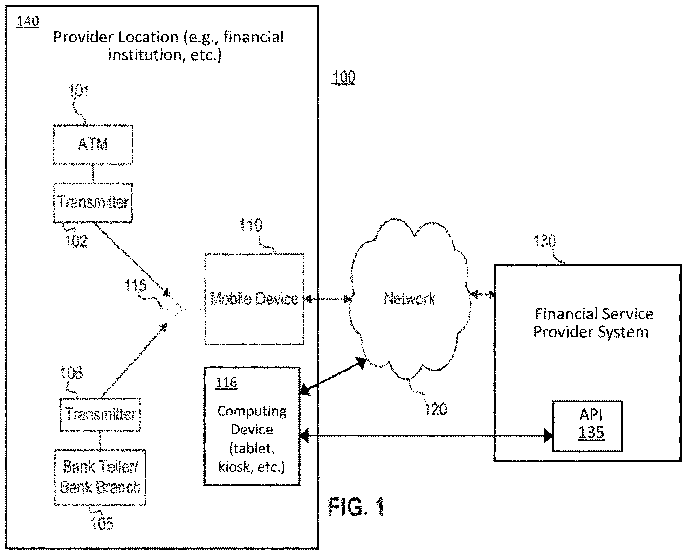

FIG. 1 is a block diagram of an exemplary system and/or platform illustrating aspects of mobile device and/or platform-agnostic infrastructure as utilized for authenticating customers, authorizing transactions, and other aspects of the disclosed embodiments, in accordance with certain embodiments of the present disclosure. The components and arrangements shown in FIG. 1 are not intended to be limiting to any disclosed embodiments, as the components used to implement the processes and features disclosed here may vary.

In accordance with certain disclosed embodiments, an exemplary system 100 may comprise a provider location 140 (e.g., a financial institution, bank branch, etc.) which may include one or more ATMs 101, one or more bank teller stations or bank terminals 105 (hereinafter referred to as "bank teller 105" for ease of reference), and/or one or more computing device(s) 116 (e.g., tablets or other computing devices operated by employees or administrators of the provider, etc.). ATM 101, bank teller 105 and computing device 116 may be provided by or operated on behalf of a financial service provider that provides financial service provider system 130 (e.g., ATM 101, bank teller 105, computing device 116, and financial service provider system 130 may be owned and/or operated by the same financial service provider). In certain embodiments, one or more of ATMs 101, bank tellers 105 and/or computing devices 116 may not be provided by the same financial service provider that provides financial service provider system, but instead they may be associated with the financial service provider that provides financial service provider system 130 such that a customer of the financial service provider may be capable of accessing account information and/or conducting transactions via ATM 101 and bank teller 105 (e.g., financial service provider does not own ATM 101 or bank teller 105, but customers of the financial service provider can still access their accounts via ATM 101 and bank teller 105). Further, ATM 101 may be associated with transmitter 102, bank teller 105 may be associated with a transmitter 106, and computing device 116 may also have a transmitter (not shown) enabling wireless communications between these components, the mobile device 110, and/or connectivity components that connect to the network or directly to the financial service provider system 130 and/or the API 135.

In some embodiments, each such transmitter may transmit a unique identification signal (e.g., a signal encoded with identification data), and by reading the identification signal of the transmitter, the associated ATM 101 and/or bank teller 105 can be identified. Transmitter 102 may be located, for example, attached to the housing of the ATM, near the ATM (e.g., affixed to a door leading to the room with the ATM if the ATM is indoors, etc.), within the housing of the ATM, integrated into the hardware of the ATM, etc. Transmitter 106 may be located, for example, on the exterior of a bank branch (e.g., on an outside wall near the door of the bank branch, etc.) or within the bank branch (e.g., on an inside wall of the bank branch, at one or more bank teller stations, affixed to one or more bank teller computer terminals, within the housing of a bank teller computer terminal, integrated into the hardware of the bank teller computer terminal, etc.).

Transmitters 102 and 106 may be any devices capable of transmitting an identification signal. In certain embodiments, transmitters 102 and 106 are low energy (LE) transmitters or ultra-low energy transmitters. In certain embodiments, transmitters 102 and 106 are LE transmitter devices configured to transmit Bluetooth.TM. LE signals. In certain embodiments, transmitters 102 and 106 transmit identification signals according to IBEACON.TM. protocols and standards. Some non-limiting examples of transmitters utilizing IBEACON.TM. include iBks101 beacons, AIRcable IBEACON.TM. dongles, devices configured with AIRcable BLE modules, BlueCats beacons, Bluebar beacons, devices configured with BlueGiga Bluetooth.TM. modules, Estimote beacons, GeLo beacons, GIMBAL.TM. beacons, Kontakt beacons, devices configured with Laird BL600 of DVK-BL600 iBeacon applications, devices configured with RADIUS NETWORKS.TM. IBEACON.TM. software, Sonic Notification beacons, etc.

The signal transmitted by transmitters 102 and 106 may include any encoded identification data/information that identifies the transmitter. Some non-limiting examples of identification signals used by Bluetooth.TM. LE transmitters include Proximity Universally Unique Identifier (UUID) information, Major identifier information, Minor identifier information, or combinations thereof. Although transmitters may generally use unique identification signals and/or information, in some embodiments, more than one transmitter may use the same identification information. For example, all ATMs and bank branches associated with the same financial institution may use transmitters that transmit the same identification information, allowing the ATMs and bank branches to be identified as associated with the financial institution but without distinguishing between the ATMs and bank branches.

Mobile device 110 may be associated with a customer of the financial service provider that provides financial service provider system 130. The customer may have one or more accounts (e.g., checking or savings accounts) provided by the financial service provider. Mobile device 110 may be any device capable of receiving transmitter signals. Mobile device 110 may include smartphones, tablets, or other mobile devices. Mobile device 110 may use any appropriate operating system, such as iOS, Windows Phone, Android, or BlackBerry operating systems. In some embodiments, mobile device 110 may be capable of receiving Bluetooth.TM. LE signals, sometimes called Bluetooth SMART.TM. devices. Mobile device 110 may also be a device with a Bluetooth.TM. LE integrated circuit. Mobile device 110 may also be any other mobile device (e.g., Google Glass.TM.) capable of receiving transmitter signals.

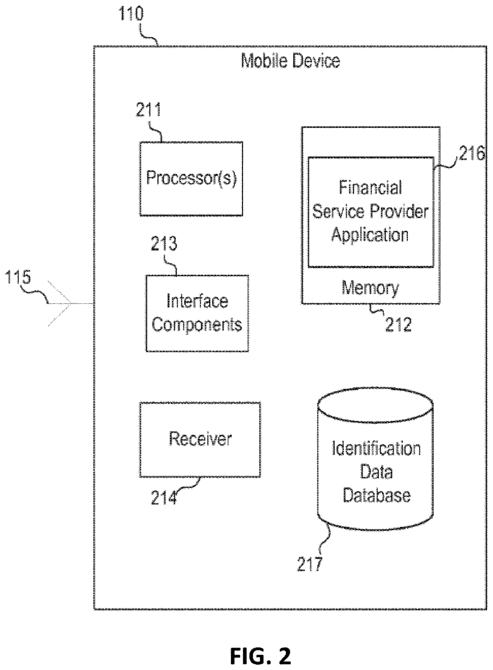

Mobile device 110 may be configured to transmit requests to conduct transactions, to perform authentication and/or authorization functionality, to request customer account information to financial provider system 130, for example, via network 120, and the like. Mobile device 110 may also be configured to receive customer account information from financial provider system 130, for example, via network 120. Further details regarding mobile device 110 are provided in FIG. 2 and its description.

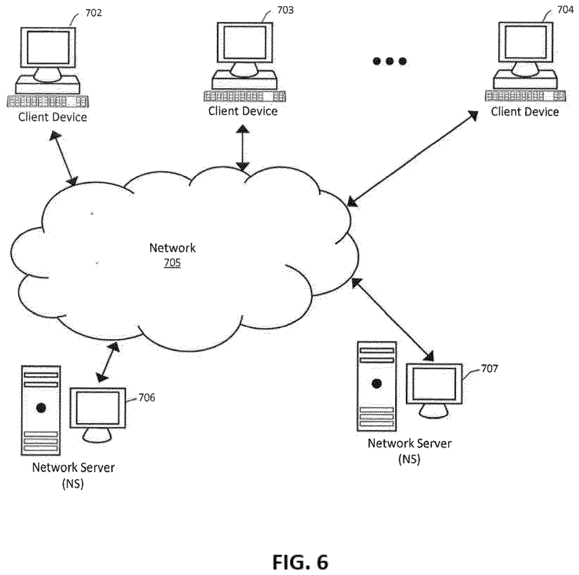

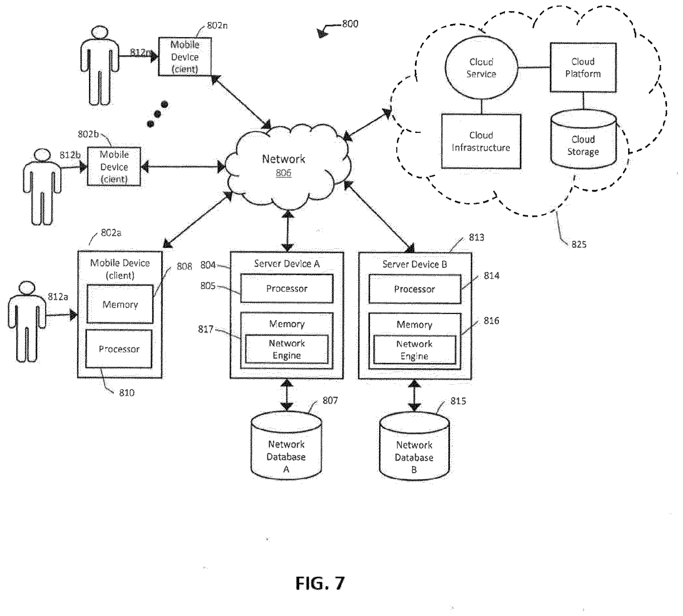

Network 120 may be any type of network that provides communications, exchanges information, and/or facilitates the exchange of information between mobile device 110 and financial service provider system 130. In one embodiment, network 120 may be the Internet, a Local Area Network, 3G telecommunications network, 4G telecommunications network, or other suitable connection(s) that enables bidirectional communication between various components of system 100. Additional details regarding the variety and/or plurality of such networks that may be utilized consistent with the disclosed technology are set forth in connection with the descriptions of FIGs. 6 and/or 7, below.

In various embodiments, the innovations herein may be implemented in connection with a financial service entity or provider that provides, maintains, manages, or otherwise offers financial services. Referring to FIG. 1, financial service provider system 130 may be associated with one such financial services or account entity or provider, such as, for example, a bank, credit card issuer, lender, merchant, credit card provider, and any other type of financial service entity that generates, provides, manages, and/or maintains financial service accounts that entail providing financial transactions such as banking transactions for customers. Financial service accounts may include, for example, credit card accounts, bank accounts such as checking or savings accounts, reward or loyalty program accounts, debit account, or any other type of financial service account known to those skilled in the art.

According to some embodiments, the financial service provider system 130 may comprise or provide one or more application programming interfaces (APIs) 135 that are configured to interact with the customer's mobile device 110, the computing device 116, and/or a wide variety of other computers, servers, processing components, and the like associated with the financial service provider system 130 and/or the services that the financial service provider system 130 provides to its customers. Herein, the term "application programming interface" or "API" refers to a computing interface that defines interactions between multiple software intermediaries. An "application programming interface" or "API" defines the kinds of calls or requests that can be made, how to make the calls, the data formats that should be used, the conventions to follow, among other requirements and constraints. An "application programming interface" or "API" can be entirely custom, specific to a component, or designed based on an industry-standard to ensure interoperability to enable modular programming through information hiding, allowing users to use the interface independently of the implementation.

With regard to the authentication and/or authorization features and functionality provided via the disclosed technology, the API 135 may provide one or more of a variety of advantages, benefits, and technical solutions, as compared to other identity verification techniques, such as improved security, improved ability to involve additional verification features and/or databases, increased speed of both transactions and verification/authentication-authorization. Here, for example, various illustrative technical solutions associated with such API-related processing are set forth in the example documentation, session processing, example code and variables, and related technical code/software instruction disclosure set forth in Appendix A, attached hereto and forming part of this disclosure.

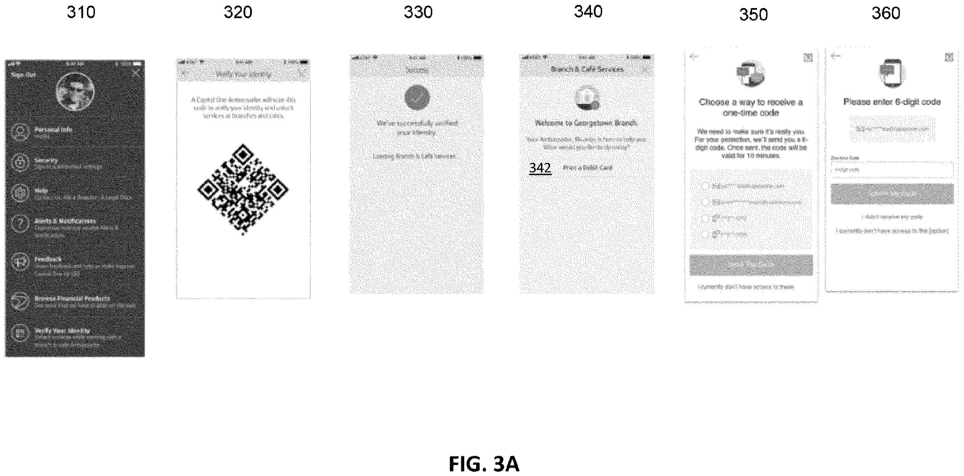

In at least some embodiments, in operation, and exemplary financial service provider system 130 may be configured to receive service requests from customers generated by their mobile devices 110, for example, via network 120 and/or API 135, and such requests may be processed via the API 135 and/or the financial service provider system 130. Financial service provider system 130 may also be configured to transmit authentication requests, push notifications, information and menus regarding services available to the customer at that branch, as well as account and other information to mobile device 110, for example, via network 120 and/or API 135, as set forth in more detail, below. Additional details regarding financial service provider system 130 are provided with respect to FIG. 3A-3C and 4-5, below, for example.

FIG. 2 is a diagram illustrating aspects of an exemplary mobile device 110 showing system-level and GUI-related user interface features, in accordance with certain embodiments of the present disclosure. In one embodiment, mobile device 110 may include one or more processor(s) 211, one or more memory devices, such as memory 212 and identification data database 217, interface components 213, receiver 214, and antenna 215.

Processor(s) 211 may be configured to execute instructions to provide processes and functionality as disclosed herein. Processor(s) 211 may be one or more known processing devices, such as a microprocessor from the Pentium.TM. family manufactured by Intel.TM. or the Turion.TM. family manufactured by AMD^{™}. Processor(s) 211 may include a single core or multiple core processor system that provides the ability to perform parallel processes simultaneously. For example, processor(s) 211 may be a single core processor that is configured with virtual processing technologies known to those skilled in the art. In certain embodiments, processor(s) 211 may use logical processors to simultaneously execute and control multiple processes. Processor(s) 211 may implement virtual machine technologies, or other similar known technologies to provide the ability to execute, control, run, manipulate, store, etc. multiple software processes, applications, programs, etc. In another embodiment, processor(s) 211 may include a multiple-core processor arrangement (e.g., dual or quad core) that may be configured to provide parallel processing functionalities to allow mobile device 110 to execute multiple processes simultaneously. One of ordinary skill in the art would understand that other types of processor arrangements could be implemented that provide for the capabilities disclosed herein.

Mobile device 110 may include one or more storage devices configured to store information used by processor(s) 211 (or other components) to perform certain functions related to the disclosed embodiments. In one example, mobile device 110 may include memory 212 that includes instructions to enable processor(s) 211 to execute one or more processes, such as mobile applications, network communication processes, and any other type of application or software known to be available on mobile device systems, including a mobile app such as a mobile banking app provided by a financial institution. In some embodiments, the instructions, mobile application programs, etc. may be stored in an external storage or available from a memory over a network (e.g., network 120). The one or more storage devices may be a volatile or non-volatile, magnetic, semiconductor, optical, removable, nonremovable, or other type of storage device or tangible computer-readable medium.

In one embodiment, memory 212 may store instructions that, when executed by processor(s) 211, cause mobile device 110 to perform one or more processes consistent with the functionalities disclosed herein. Methods, systems, and articles of manufacture consistent with disclosed embodiments are not limited to separate programs or computers configured to perform dedicated tasks. For example, mobile device 110 may include a memory that may include one or more programs to perform one or more functions of interface components 213 and receiver 214. Moreover, processor(s) 211 may execute one or more programs located remotely from mobile device 110. For example, mobile device 110 may access one or more remote programs, that, when executed, perform functions related to disclosed embodiments. Memory 212 may include or be associated with one or more memory devices that store data and instructions used to perform one or more features of the disclosed embodiments, and memory 212 may also include any combination of one or more databases controlled by memory controller devices (e.g., server(s), etc.) or software, such as document management systems, Microsoft SQL databases, SharePoint databases, Oracle.TM. databases, Sybase.TM. databases, or other relational databases (see, e.g., identification data database 217, described below). Mobile device 110 may also be communicatively connected to one or more memory devices (e.g., other databases not shown) locally or through a network. The remote memory devices may be configured to store information and may be accessed and/or managed by mobile device 110. By way of example, the remote memory devices may be document management systems, Microsoft SQL databases, SharePoint databases, Oracle.TM. databases, Sybase.TM. databases, or other relational databases. Systems and methods of disclosed embodiments, however, are not limited to separate databases or even to the use of a database.

Mobile device 110 may include identification data database 217, which may include identification information for identifying transmitters associated with ATMs and/or bank branches associated with financial service provider system 130. For example, identification data database 217 may include one or more tables that link each unique identification information to its respective transmitter, the location (e.g., address) of the transmitter, and/or the ATM or bank branch with which it is associated, etc. Identification data database 217 may be controlled by a memory controller device or software, such as document management systems, Microsoft SQL databases, SharePoint databases, Oracle.TM. databases, Sybase.TM. databases, or other relational databases. In some embodiments, identification data database 217 may be a remote memory device that may be accessed and/or managed by mobile device 110.

Mobile device 110 may also include one or more I/O devices that may comprise one or more interfaces for receiving signals or input from input devices and providing signals or output to one or more output devices that allow data to be received and/or transmitted by mobile device 110. For example, mobile device 110 may include interface components 213 that may provide interfaces to one or more input devices such as one or more display screens, on-screen keyboards, fingerprint recognition devices, and the like, that enable mobile device 110 to receive data from the customer and provide notifications to the customer. Further, interface components 213 may include components configured to send and receive information between components of system 100, such as between mobile device 110, transmitters 102 and 106, and financial service provider system 130, for example, via network 120.

Mobile device 110 may also include antenna 215. Antenna 115 may be any type of known antenna capable of detecting transmitter signals. For example, antenna 215 may be any type of commercially available antenna. In certain embodiments, antenna 215 may be an LE antenna. In certain embodiments, antenna 215 may be a Bluetooth.TM. LE antenna. In some embodiments, antenna 215 may be integrated with receiver 214 and/or with other components of mobile device 110.

Mobile device 110 may also include receiver 214. Receiver 214 may be any type of receiver that can receive one or more frequencies of transmitted signals (e.g., from antenna 215), and may be configured in hardware, software and/or some combination of hardware and software. Receiver 214 may also convert the received signals into digital data, and send the digital data to other components of mobile device 110. Receiver 214 may also transmit the identification data using any known transmission method such as, for example, using one or more data packets. In some configurations, receiver 214 may be capable of simultaneously listening for a plurality of differently modulated signals at once. In certain embodiments, receiver 214 may be an LE receiver. In certain embodiments, receiver 214 may be a Bluetooth.TM. LE antenna. In some embodiments, receiver 214 may be integrated with antenna 115 and/or other components of mobile device 110.

In certain embodiments, memory 212 may include one or more software components that, when executed by processor(s) 211, perform one or more processes consistent with the disclosed embodiments. For example, memory 212 may include financial service provider application 216, such as a mobile banking app, which may include software instructions executable by one or more processors, such as processor(s) 211. When executed, the software instructions for financial service provider application 216 may provide features relating to performing authentication and/or authorization processes, receiving identification data (e.g., from receiver 214) and/or notification that identification data for an ATM and/or bank branch associated with financial provider system 130 has been received (e.g., from the operating system of mobile device 110), optionally confirming identification data is associated with a transmitting device associated with financial service provider system 130, transmitting requests for the customer's account information, such as balance, safe spending limit, or other account data to financial service provider system 130 (e.g., via network 120), receiving requested account data from financial service provider system 130 (e.g., via network 120), and receiving a push notification for display on mobile device 110 (e.g., from financial service provider system 130).

In some embodiments, financial service provider application 216 may be running (either actively being used by the customer or passively running in the background) when mobile device 110 is on and transmitter signals are received. In some embodiments, financial service provider application 216 may receive the transmitter identification data and check whether the identification data matches identification data for ATMs and/or bank branches associated with financial service provider 130 (e.g., in identification data database 217). In some embodiments, financial service provider application 216 may not be running when mobile device 110 is on and transmitter identification signals are received. In such cases, the operating system of mobile device 110 may be configured to receive and check transmitter identification data (translated and/or determined from the identification signals by receiver 214 or detected based on the received identification signals) against identification data database 217, start financial service provider application 216 when the identification data matches identification information for ATMs and/or bank branches associated with financial service provider system 130, and transmit the matched identification data or notification that a match has been found to financial service provider application 216 for subsequent processing. In some embodiments, e.g. even when financial service provider application 216 is running, transmitter identification data may first be processed and matched by the operating system before the identification data (or notification of match identification data) is transmitted to financial service provider application 216 for subsequent processing.

Financial service provider app 216 may further be configured to transmit a request to financial service provider system 130 for the customer's account data and/or services offered or available at a branch location, e.g., after verification such as matched identification data is established (e.g., after received identification data is matched to identification information in identification data database 217 associated with financial service provider system 130, etc.). The request may be an encrypted application programming interface (API) request, from the API 135, transmitted via network 120. The request may include one or more of the identifier for mobile device 110, customer information (e.g., customer name, account number, etc.), identification data, customer notification preferences, and/or the type of request (e.g., requesting services such as wire transfers, cashier's checks, etc., requesting account balance information, safe spending limit information, other account information, or any combination thereof). The request may also include information such as the location of the customer, location of the ATM/bank branch associated with the transmitter identification data, and/or other information that may be used by the financial service provider for purposes set forth herein, i.e, beyond simply providing account data to the customer. For example, the request may include information that allows the financial service provider to better understand the transaction(s) being requested by a customer and associated security risks with authorizing or approving such transaction(s).

In some embodiments, customer notification preferences may include information entered by the customer and stored by financial service provider application 216 regarding the customer's customary or preferred transactions, preferred method of notification for received account information, and other such preferences or historical information. For example, financial service provider system 130 may be configured to transmit authentication-authorization requests, available services, requested account information, etc. as a push notification to the mobile app, as a text, an e-mail, or other type of notification that can be received and displayed to the customer via mobile device 110, and the customer may pre-select the form in which the financial service provider system 130 will transmit the requested information. If the customer does not pre-select a notification method, financial service provider system 130 may be configured to send the notification via a default method (e.g., all notifications would be push notifications via a mobile app, unless another method were selected by the customer). In certain embodiments, notification options may not be available, and financial service provider system may be configured to transmit the notification via one method. In certain embodiments, financial service provider system 130 may transmit the requested account data to financial service provider application 216, and financial service provider application transmits the information via the method selected by the customer or via a default method. One of ordinary skill in the art would understand desirable configurations for the notification for account information and parameters desirable for a customer to configure.

In some embodiments, the customer may also be able to set preferences for the types of services and/or requests offered or transmitted by financial service provider application 216. For example, financial service provider application 216 may be configured to allow the customer to choose what type of information (e.g., banking services, account balance information, transaction information, etc.) should be requested when identification data is matched. For services and/or transactions that may be determined to be risky (e.g., large cash withdrawals (e.g., over $1,000), international wire transfers, cashier's checks to unknown third parties, etc.), the API 135 and/or the financial service provider application 216 may be configured to trigger one or more additional authentication and/or authorization protocols, as set forth in more detail, below. In some embodiments, the exemplary system 130 identify the types of request that are deemed potentially risky and thus instruct to process via the API 135 and/or the financial service provider application 116 to assess the parameters that would trigger such one or more additional security measures.

FIG. 3A is a series of exemplary graphical user interfaces (GUIs) displayed on a customer's device in connection with the authentication and/or authorization features and functionality set forth herein, in accordance with certain embodiments of the present disclosure. In FIG. 3A, a series of graphical user interfaces displayed on a customer's mobile device, illustrating an exemplary sequence or process of GUIs associated with authenticating a user and authorizing a transaction, is disclosed. Referring to FIG. 3A, the process begins at a first user interface 310, which illustrates an exemplary home screen displayed on the mobile device of a customer who has entered the premises of a financial institution 140 and wishes to conduct a bank-related transaction. The exemplary home screen 310 illustrated includes a variety of selections and options to facilitate a customer taking an action and the associated user experience on the UI of their mobile device at the financial institution 140. Examples of such transactions may include the customer wishing to obtain a new, permanent debit card from the financial institution, the customer wishing to send a wire transaction, the customer wishing to obtain a cashier's check, as well as other example transactions detailed in this disclosure and Appendix A, and/or otherwise known in the field.

To perform such transactions at the financial institution 140, the customer may need to verify their identity via an authentication process. As set forth in this illustrated embodiment, verification may begin by the customer signing into their mobile app and executing an authentication process, which the customer may initiate via the mobile app or which may be pushed to the customer's mobile device by a computer or employee associated with the branch. To initiate such authentication session using the app, the customer may select an "in-person authentication" option or tile in their mobile app, as set forth in the example embodiment of FIGs. 3A-3C. Upon selection of such "in-person authentication" option, the customer's mobile app displays a confirmatory screen 320, as shown in FIG. 3A, which may display a code, such as an access or QR code (hereafter "QR code"), that must be scanned by an employee of the financial institution 140 to verify their identity and unlock the desired services at the financial institution. The confirmatory screen 320 may display the QR code and a message informing the customer that the QR code must be scanned by a branch employee or computer, to verify the customer's identity before moving on to any additional authentication or authorization steps.

Once the customer's identity has been verified, e.g. via a verification screen 330, the authentication session may then proceed to a services screen 340, which may display one or more services, e.g., at 342, that the customer may wish to perform while visiting the branch. The example services screen 340 of FIG. 3A illustrates a UI selection for an exemplary service 342 that provides the customer the option to print a new debit card at the branch. Once the customer selects such UI selection 342, a call may be made to the API which instructions the authentication session to proceed to a next stage of authentication, e.g., via issuing an additional authorization request 350, which may display a desired level of additional security needed to authorize the requested transaction. The desired level of additional security may include a variety of known second-factor authentication (2FA) or multi-factor authentication (MFA) schemes or protocols, as well as whatever other direct, in-person or face-to-face authentication-authorization procedures that the API, the financial institution computer system, and/or the financial institution personnel may determine as appropriate to verify the customer's identity. According to the exemplary embodiment of FIG. 3A, the API and/or associated computer system has determined that a one-time code or pin is needed from the customer before the financial institution's branch 140 can authorize and proceed with the action requested by the customer. In this illustrative embodiment, for example, where the customer requests that the branch issue a new debit card, the API issues a decision that the customer must verify their identity via a one-time code, wherein the additional authorization screen 350 comprises a GUI with UI options by which the customer may select one of their pre-established communication channels to receive the one-time code. Further, one or more additional authorization screens 360 may be generated and provided to the customer, such as any GUI screens that are needed to fulfill or complete the additional authorization request generated at 350. In the example embodiment of FIG. 3A, the additional authorization screen 360 includes a field for the customer to enter the one-time code and thereby verify or establish their identity so the financial institution may authorize and complete the action the customer requested.

Further, while only one exemplary authorization request is illustrated in FIG. 3A, it is noted that one or more additional authorization screens, e.g. 350, may be generated and transmitted to the customer's device, including but not limited to requests for customers to scan their driver's license, to perform a biometric scan such as fingerprint, face scan, etc., on their mobile device or on another device, and/or to perform another authorization, authentication, credential verification, or other such validation, e.g., as set forth herein including in Appendix A.

Additional security from both fraudulent transactions, fraudulent customers and internal fraudsters at a bank branch can be prevented by means of such additional authorization screens 350. For example, by providing a list of services via the services screen 340 that are selectable only by the customer on his/her mobile device and configured whereby such services may all have different authorization procedures also helps increase security by preventing a fraudster working as an employee from simply taking an unwanted action against the customer's account(s) or from taking any non-customer selected action, since such additional authorization, e.g., especially if required to be performed via the customer's mobile device on site, would not have been completed for such other actions, and thus such employee attempted fraud attempts would be automatically blocked, absent such authentication-authorization.

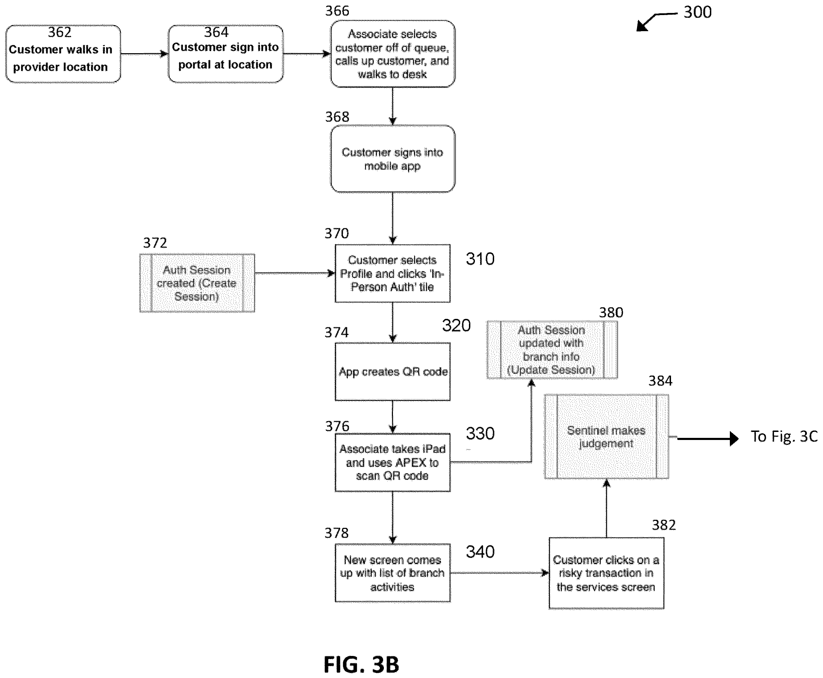

FIGs. 3B-3C are a flow diagram illustrating an exemplary process flow 300 consistent with the authentication and authorization features and functionality set forth in FIG. 3A and elsewhere herein, according to various implementations of the disclosed technology. Referring first to FIG. 3B, the exemplary process flow 300 begins with a customer entering a location of a goods or services provider, such as a branch of a financial institution, at 362. Next, at 364, the customer signs into or portal, tablet, electronic kiosk or the like of the provider at the location, to advise the provider that they are now inside or in a queue at the provider branch location and/or to otherwise begin one or more transactions with the provider. In one illustrative embodiment, for example, such sign-in may be with a customer relationship portal, such as APEX^{™} or similar portal, provided by Capital One^{®} at their bank branch locations. Based on such sign-in or when the customer reaches the front of the queue, a staffperson at the branch location may then, at 366, meet with the customer face-to-face, e.g., at a desk. At or prior to this point in the process, the customer may sign into a mobile app associated with the provider, at 368, by which the customer may request services and obtain authentication-authorization for same from the provider. Next, in at least some embodiments, by utilizing any of: a customer action via the mobile app, an action or prompt by personnel associated with the provider or provider computer, or a decisioning determination made by the API 135, an authentication session may be created/commenced, at 372. In some embodiments, when such authentication session commences, the customer may be presented with a GUI and associated UI options via the mobile app, as shown and described in connection with the first user interface 310 of FIG. 3A, above. Here, for example, in connection with a verify your identity UI option of such first user interface 310, the customer may select an 'in-person authentication' tile or option, as shown in Fig. 3B, at 370. Once such tile or option is selected, the QR code may be created by the API or computer system, at 374, for transmission to the mobile device of the customer, via the mobile app, to verify the identity of the customer. According to the illustrated embodiment, the transmitted QR code may be displayed on the mobile device, e.g., as the confirmatory screen 320 of the illustrative GUI sequence shown in FIG. 3A. As a final step of this initial identity verification, an employee, associate or computing device of the financial institution may scan the QR code to verify that the customer is within the branch, and thereby update the authentication session with the specific branch information, at 380.

In some embodiments, once the authentication-authorization session is updated with the specific branch information, the API may push branch information and/or a list of activities and/or services available at the branch for display on the customer's mobile device, at 378. One illustrative example of such branch information with list of activities is shown via the services screen 340 of FIG. 3A. Once verified, the customer may select and complete various basic (non-risky) tractions, such as balance inquiries, etc., without additional authentication or authorization. However, as shown at 382, if a customer requests a risky transaction via the services screen, such as an overseas wire transfer, a large cashier's check, etc., the authentication-authorization session including the API and/or financial institution may be triggered, at 384, to evaluate the requested transaction, apply various policy information and/or considerations, and determine if any additional authentication and/or authorization should be requested, before allowing the customer to proceed with the transaction.

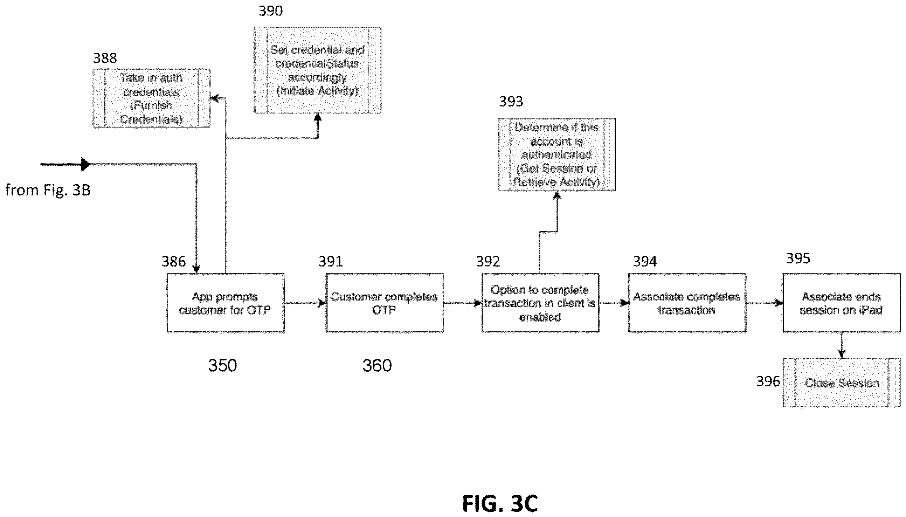

If the API and/or financial institution determines additional authentication and/or authorization should be requested, the process flow 300 may proceed with additional verification, such as the exemplary verification processing shown in FIG. 3C. As a first step of one such additional verification processing, the mobile app may prompt the customer for a one-time password (OTP), at 386. Here, this non-limiting example of such additional verification is also shown via the additional authorization screen 350 of FIG. 3A, which provides a customer with a list of pre-established email addresses and phone numbers, such that the customer may select a number or address at which they wish to receive the one-time password. Upon submission of a correct one-time password, at 391, e.g.., via the additional authorization screen 360 of FIG. 3A, various options and functionality are unlocked, as set forth below. Further, in parallel, the API and/or financial institution computer system may take in the authentication-authorization information of the customer, at 388, and/or set various associated credentials and/or credential status information, accordingly, at 390. Here, for example, various technical implementations of the taking in/furnishing of such authentication credentials 388, various illustrative credential types, the setting of credentials and credential status information 390, and other processing of such credential information is set forth in Appendix A.

Once the customer submits the correct OTP, at 391, the API and/or financial institution computer may be enabled to complete the requested transaction, at 392. Further, the API and/or financial institution computer may be configured to determine, upon receipt of the OTP or other authorization information, if the customer's account is authenticated, at 393, i.e., to obtain session information and/or retrieve other historical or other activity information regarding the customer and/or their accounts. In the final 3 steps, the API, financial institution computer and/or the employee or personnel of the financial institute may complete the traction, at 394, end the session, at 395, and close the session, at 396.

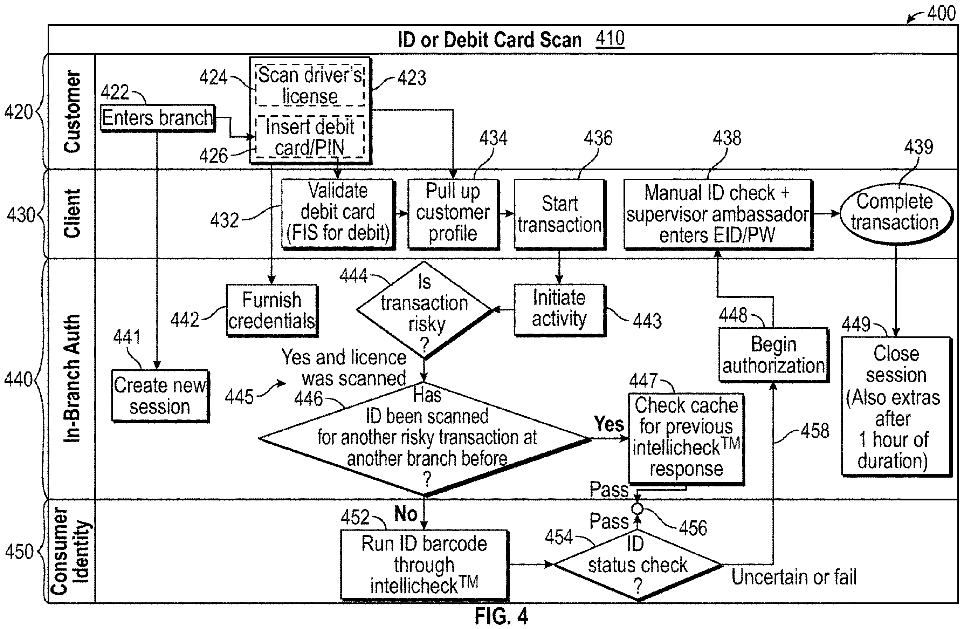

FIG. 4 is another flow diagram illustrating an exemplary process flow 400 consistent with the authentication and/or authorization features and functionality set forth herein, in accordance with certain embodiments of the present disclosure. The exemplary process flow 400 of FIG. 4 illustrates a representative process that a customer may sequence through when entering a teller line to conduct a transaction at a financial institution, depicted in manner that delineates different steps occurring with respect to the customer, at 420, steps taken with respect to a client device location in the branch, at 430, steps taken with respect to in-branch authentication that may be performed via the API and/or financial institution computers, at 440, as well as steps taken with respect to confirming a customer's identity, at 450. Referring to the top of FIG. 4, the customer first enters the branch, at 422, and then performs an initial verification and/or authentication step, at 423. In the illustrative embodiment shown in FIG. 4, such initial verification and/or authentication step may include one or both of scanning a customer's driver's license 424 and/or inserting a customer debit card and confirming the PIN 426, among other such customer identification steps. Once the customer has been verified at step 423, the branch computer(s) may furnish customer credentials to the API and/or other in-branch authentication processing components, at 442, e.g., to help authorize and complete any requested transactions.

In some embodiments, with respect to a client device location in the branch, at 430, the client device may validate debit card, pin, and/or other customer identifying information provided, at 432. Then, the client device may pull up the customer profile, at 434, and begin a transaction requested or initiated by the customer, at 436. Next, the requested transaction may be passed to the API and/or in-branch authentication processing component(s) to initiate the requested activity, at 443, and determine whether or not the requested activity may be risky, at 444. If the requested transaction is determined to be risky, a variety of additional processing, authentication and/or authorization steps may be taken. While one illustrative example of such processing is shown in connection with FIG. 4, it should be appreciated that other authentication steps may be taken to verify the identify of the customer, i.e., to thereby authorize completion of the risky transaction.

In the illustrative embodiment of FIG. 4, the exemplary authentication process shown may next determine, for risky transactions, whether or not the customer's license has been scanned, at 445. (If not already done, the authentication process may have the customer scan their driver's license at this time.) Once a scan of the customer's driver's license has been confirmed or obtained, the authentication process may next check to see whether or not the customer's driver's license (and/or other ID presented) has been scanned/used for another risky transaction, before, e.g., at another branch, or at this branch, etc. If so, the authentication process may then check the memory/cache for the results of any previous verification procedure performed on the ID, at 447 (e.g., by intellicheck^{™}, etc.), and may proceed to next steps or even approve the requested transaction, at 456, if the customer's ID previously passed the prior verification process (e.g., a verification procedure, process, or entity, such as an intellicheck^{™} validation process). If, at 446, it is determine that the ID has not been previously processed, the authentication process may run the customer's ID through a verification procedure such as intellicheck^{™} , at 452, and then assesses, at 454, whether or not the ID presented by the customer passes the verification procedure. If the ID passes the verification procedure, the authentication process may approve the requested transaction, at 456. If the ID verification procedure yields either a failed or uncertain result, the authentication process begins an in-branch ID/customer authorization process, at 448. Here, for example, in the illustrative embodiment of FIG. 4, the in-branch authorization process may include a manual ID check performed by branch personnel, at 438, where a supervisor or other staffperson who approves the ID may, e.g., enter a password to authorize the transaction to proceed. Once the ID has been approved, the transaction may be completed at the client device level in the branch, at 439, and then the overall authentication process and session may be closed, at 449.

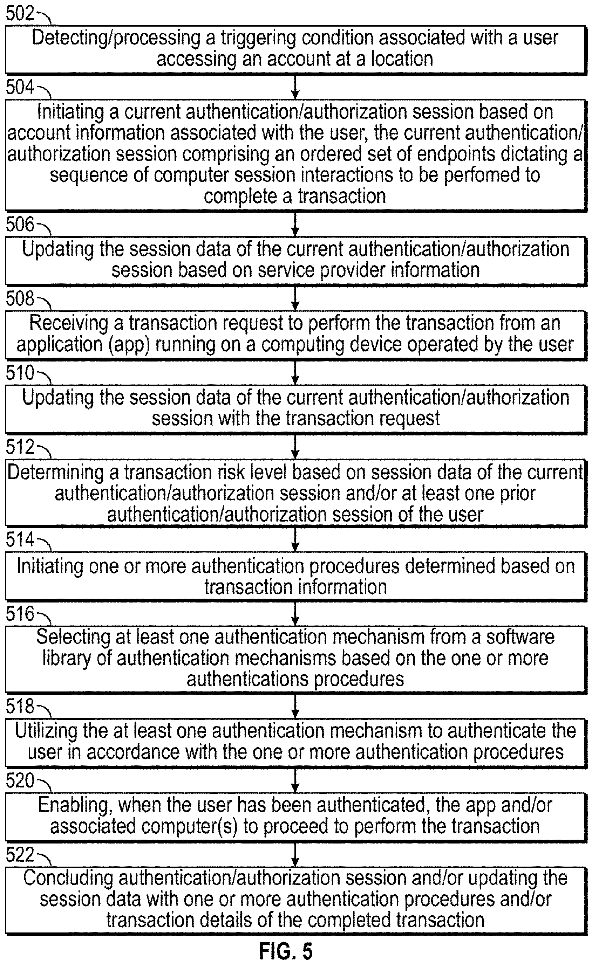

FIG. 5 is a flowchart illustrating an exemplary process 500 related to providing authentication and/or authorization features and functionality, in accordance with certain embodiments of the present disclosure. Referring to FIG. 5, an illustrative process 500 related to performing an in-branch authentication-authorization process, which may involve a customer's mobile device and/or platform agnostic infrastructure, for risky transactions may comprise: detecting/processing a triggering condition associated with a user (e.g., customer, etc.) accessing an account at a location, 502; initiating a current authentication-authorization session based on account information associated with the user, the current authentication-authorization session comprising an ordered set of endpoints dictating a sequence of computer session interactions to be performed to complete a transaction, 504; updating the session data of the current authentication-authorization session based on service provider information, 506; receiving a transaction request to perform the transaction from an app running on a computing device operated by the user, 508; updating the session data of the current authentication-authorization session with the transaction request, 510; determining a transaction risk level based on session data of current and/or prior authentication-authorization session(s) of the user, 512; initiating one or more authentication procedure(s) determined based on transaction information, 514; selecting at least one authentication mechanism from a software library of authentication mechanisms based on the one or more authentication procedure(s), 516; utilizing the at least one authentication mechanism to authenticate the user in accordance with the one or more authentication procedure(s), 518; enabling, when the user has been authenticated, the app and/or associated computer(s) to proceed to perform the transaction, 520; and/or concluding the authentication-authorization session and/or updating the session data with the one or more authentication procedures and/or transaction details of the completed transaction, 522. Various illustrative details of the endpoints, features and functionality set forth in FIG. 5 are described below.

Various specific systems, methods and computer-readable media embodying such features and functionality are provided via the disclosed technology. On illustrative method involving such authentication-authorization technology may comprise: detecting, by one or more processors, a triggering condition associated with a user accessing an account at a location, the triggering condition pertaining to an activity of the user to access the account; initiating, by the one or more processors and in response to detecting the triggering condition, a current authentication-authorization session based on account information of the account, the current authentication-authorization session comprising an ordered set of endpoints dictating a sequence of computer session processing and/or interactions to be performed to complete a transaction during the current authentication-authorization session, and session data, which may comprise a session timestamp, location information of the location, and the account information of the account; receiving, by the one or more processors, service provider information of a service provider associated with the transaction, the service provider information comprising service provider venue information for the location and service provider identity information; updating, by the one or more processors, the session data of the current authentication-authorization session based on the service provider information; receiving, by the one or more processors, a transaction request to perform the transaction from an application (app) running on a computing device operated by the user; updating, by the one or more processors, the session data of the current authentication-authorization session with the transaction request; determining, by the one or more processors, a transaction risk level based on the session data of the current authentication-authorization session and at least one prior authentication-authorization session of the user; instructing, based on the transaction risk level, the app to initiate one or more authentication procedures, wherein the one or more authentication procedures is/are determined based on one or more of: a database of legitimate transactions at the location, a database of historical transactions of the user, and a database of fraudulent transactions; determining, by the one or more processors, one or more authentication procedures to authenticate the user; selecting, by the one or more processors, at least one authentication mechanism from a software library of authentication mechanisms based on the one or more authentication procedures; utilizing, by the one or more processors, the at least one authentication mechanism to authenticate the user in accordance with the one or more authentication procedures; enabling, by the one or more processors, when the user has been authenticated, the app to proceed to perform the transaction; and concluding, by the one or more processors, the authentication-authorization session upon the completion of the transaction, the session data further updated with the one or more authentication procedures and transaction details of the completed transaction.

According to present embodiments in regard to the endpoints described above, various functionality may be implemented by the disclosed technology when certain specific customer transaction activities/events, referred to as 'endpoints' herein, occur or transpire. In some embodiment, for example, a series of endpoints may be defined, wherein significant processing occurs at such points of a customer transaction, which may be conducted via an authentication process and/or one or more activity authorization flows. By way of illustration, for example, a series of endpoints may include: creating a session, initiating an activity on behalf of the customer, furnishing credentials, updating an activity authorization flow, begin an activity authorization flow, complete an activity authorization flow, explicitly close the session, and/or retrieving the status of an activity authorization flow.

In some embodiments, for example, a Create a Session endpoint may be generated to one or more of define a session, to track the interaction of a branch customer with an associate, and/or to constrain any authentication that's completed to activities initiated within the session. Among other things, based on the Create a Session endpoint, various systems and methods herein may be configured to retrieve session information based on the session created, to, for example, process or view a holistic view of the customer's interaction.

In some embodiments, an Initiate Activity endpoint, i.e., initiating an activity on behalf of a customer, may be generated to define and initiate various activities related to the customer and/or requested transaction. Here, for example, once the full set of data regarding a transaction requested by a customer is known, this data may be processed and leveraged to one or more of: capture a customer intent (e.g., transaction amount, activity type, etc.), generate a snapshot or image of what the session looks like including session data, determine if the customer intent is considered a high risk transaction, and/or set the authentication and/or authorization requirements for the requested transaction. In certain illustrative implementations, session data may comprise a session timestamp, location information of the branch location, account information of the account, platform identifier(s), and other information related to the customer, requested transaction, branch location, customer, customer account(s), and/or third parties involved in the transaction. According to certain embodiments, depending on authentication requirements, this endpoint may send furnished driver'slicense or other verifying credential information to a verification procedure or entity, such as Intellicheck^{™}.

In some embodiments, a Furnish Credentials endpoint may be generated in connection with any customer credentials requested from or provided by the customer. Here, for example, if any sort of credentials are supplied by the customer (e.g., government ID, debit card, single sign-on with password, QrCode, etc.), this endpointwill pull relevant information from one or more internal and/or external computers/systems and tether it to the session.

According to some embodiments, an Update an Activity Authorization Flow endpoint may be generated in connection with updating an activity authorization flow initiated during a created session. Here, for example, when a session is started outside a system associated with an employee or ambassador of the branch location (e.g., outside EASE^{™} by Capital One, etc.), the session needs to be updated with branch information once an ambassador begins servicing the customer via the branch or ambassador systems (e.g., APEX^{™} by Capital One, etc.). In embodiments where sessions are created or managed by, or otherwise involve, a customer's mobile device, such Update an Activity Authorization Flow endpoint provides important information and processing for any mobile authentication flows and/or mobile activity authorization flows.

In some embodiments, a Begin an Activity Authorization Flow endpoint may be generated when a separate/new authorization is needed during a session. According to embodiments herein, when such separate authorization (e.g., initiated via the customer, the employee/ambassador, an action taken, a computer system or algorithm, etc.) is needed, which may be determined via the Initiate Activity endpoint processing, this Begin an Activity Authorization Flow endpoint triggers the request for a new activity authorization flow. Here, for example, such activity authorization flows may be commenced an involve or require an action to be taken by one of the parties involved, such as a supervisor override, a two-step or multi-factor authentication process, an action by the customer such as responding to an SMS message and/or other such authorization actions, and the like.

According to some embodiments, a Complete an Activity Authorization Flow endpoint may be generated in connection with completing an activity authorization flow processed during a session. Here, for example, with regard to two-step or multi-factor authorizations that require a response from an employee, customer, etc., this endpoint validates the information that is input by such actor (e.g., validating an SMS response from customer, etc.).

According to some embodiments, a Close Session endpoint may be generated to explicitly close the session. Among other things, such Close Session endpoint may provide important protections to prevent certain types of fraud from being committed once a session has started and crucial customer information is being handled. Here, for example, establishing the Close Session endpoint may cut-off a customer and the employee's ability to perform any more activities using the session's authentication status, which enables prevention of internal fraudsters from conducting additional, fraudulent transactions based on the session, based on the authentication(s) and/or authorizations made, or based on other sensitive information provided or available during the session.

In some embodiments, a Retrieve Status endpoint may be generated, e.g., to retrieve the status of an authorization flow. Here, for example, when a client such as a monitoring or supervisory entity or personnel (e.g., using or via SASSy^{™} by Capital One, etc.) does not have access to the session ID, they can send a request to look for the session status of a particular customer (e.g., using other identifiers, such as a customer ID, a profile ID, etc.), such as for a particular activity on a particular account.

Additional details and aspects of the above exemplary endpoints and endpoint functionality are set forth in more detail in Appendix A, submitted herewith, which is incorporated into the present disclosure.

Further, in various embodiments of such systems, methods and computer-readable media, the step of enabling the app to proceed to perform the transaction may comprise authorizing, by the one or more processors, a point-of-sale (POS) device, such as a tablet or any other form of provider computing device, of the operator at the location to perform the transaction for the user.

In various other embodiments of such systems, methods and computer-readable media, the step of authenticating/authorizing, by the one or more processors, the user based on the one or more authentication procedure may comprise invoking, by the one or more processors, one or more biometric feature-based authentication mechanisms, and communicating, by the one or more processors, with a server of an identity verification supplier or provider. Here, for example, in addition to communicating with identity verification suppliers, such as intellicheck TM and similar organizations, implementations herein may communicate with various suppliers and providers who are in possession of such data enabling them to confirm biometric information provided by the customer to conduct the desired transaction.

According to further embodiments of such systems, methods and computer-readable media, the step of determining, by the one or more processors, whether the transaction may be risky comprises determining a risk level associated with the transaction based at least in part on a transaction policy. Here, for example, such transaction policy may include assigning various parameters and values to aspects of various transactions related to risk, such as the customer's intent (e.g., transaction amount, activity type, etc.) and details of the customers interaction or session at the location (e.g., platform identifier, branch location, etc.), to determine whether or not customer request is a high risk transaction. Illustrative examples of such risk level determination(s), transaction policies, parameters, values and processing are set forth in Appendix A.

In still further embodiments of such systems, methods and computer-readable media, the step of detecting the triggering condition may comprises one or more of: detecting a physical presence of the user at the location based on one or both of a NFC signal of a mobile device of the user, and/or geo-location of the user, the user visiting the location to perform one or more transactions with the account; receiving user check-in information upon scanning a QR code generated at a mobile device of the user, e.g., as shown and described in connection with FIG. 3A; receiving user check-in information upon scanning an identification card of the user, e.g., as shown and described in connection with FIG. 4; receiving user check-in information upon scanning a transaction card and a PIN of the user, e.g., as also shown and described in connection with FIG. 4; and/or receiving credential information that authenticates the user to login for access to the account of the user. Here, with regard to the latter features, such credential information may comprise user login information used by the customer to access their online account(s) with the provider or financial institution, Debit car PIN, SSO (single sign on), electronic confirmation (e.g., swipe magnetic strip, scan barcode, etc.) of a driver's license or other government ID, a one-time PIN, manual ID check of a driver's license or other government ID, use of a QR code, etc. Illustrative examples of such credential processing and credential types are set forth in Appendix A.

According to other embodiments of such systems, methods and computer-readable media, the process may further comprise steps of establishing a machine learning model using data associated with the authentication-authorization session, and predicting the one or more authentication procedures using the machine learning model.

Additionally, according to yet other embodiments of such systems, methods and computer-readable media, the software library of authentication mechanisms may comprise a software plug-and-play library, wherein the at least one authentication mechanism selected comprises a plug-and-play mechanism.

FIG. 6 depicts a block diagram of an exemplary computer-based system/platform in accordance with one or more embodiments of the present disclosure. However, not all of these components may be required to practice one or more embodiments, and variations in the arrangement and type of the components may be made without departing from the spirit or scope of various embodiments of the present disclosure. In some embodiments, the exemplary inventive computing devices and/or the exemplary inventive computing components of the exemplary computer-based system/platform may be configured to manage a large number of instances of software applications, users, and/or concurrent transactions, as detailed herein. In some embodiments, the exemplary computer-based system/platform may be based on a scalable computer and/or network architecture that incorporates varies strategies for assessing the data, caching, searching, and/or database connection pooling. One example of the scalable architecture is an architecture that is capable of operating multiple servers.

In some embodiments, referring to FIG. 6, members 702-704 (e.g., clients, etc.) of the exemplary computer-based system/platform may include virtually any computing device capable of receiving and sending a message over a network (e.g., cloud network), such as network 705, to and from another computing device, such as servers 706 and 707, each other, and the like. In some embodiments, the member devices 702-704 may be tablets, personal computers, multiprocessor systems, microprocessor-based or programmable consumer electronics, network PCs, and the like. In some embodiments, one or more member devices within member devices 702-704 may include computing devices that typically connect using wireless communications media such as tablets, cell phones, smart phones, pagers, walkie talkies, radio frequency (RF) devices, infrared (IR) devices, CBs, integrated devices combining one or more of the preceding devices, or virtually any mobile computing device, and the like. In some embodiments, one or more member devices within member devices 702-704 may be devices that are capable of connecting using a wired or wireless communication medium such as a PDA, POCKET PC, wearable computer, a laptop, tablet, desktop computer, a netbook, a video game device, a pager, a smart phone, an ultra-mobile personal computer (UMPC), and/or any other device that is equipped to communicate over a wired and/or wireless communication medium (e.g., NFC, RFID, NBIOT, 3G, 4G, 5G, GSM, GPRS, WiFi, WiMax, CDMA, satellite, ZigBee, etc.). In some embodiments, one or more member devices within member devices 702-704 may include may run one or more applications, such as Internet browsers, mobile applications, voice calls, video games, videoconferencing, and email, among others. In some embodiments, one or more member devices within member devices 702-704 may be configured to receive and to send web pages, and the like. In some embodiments, an exemplary specifically programmed application consistent with the present disclosure may be configured to receive and display graphics, text, multimedia, and the like, employing virtually any web based language, including, but not limited to Standard Generalized Markup Language (SMGL), such as HyperText Markup Language (HTML), a wireless application protocol (WAP), a Handheld Device Markup Language (HDML), such as Wireless Markup Language (WML), WMLScript, XML, JavaScript, and the like. In some embodiments, a member device within member devices 702-704 may be specifically programmed by either Java, .Net, QT, C, C++ and/or other suitable programming language. In some embodiments, one or more member devices within member devices 702-704 may be specifically programmed include or execute an application to perform a variety of possible tasks, such as, without limitation, messaging functionality, browsing, searching, playing, streaming or displaying various forms of content, including locally stored or uploaded messages, images and/or video, and/or games.

In some embodiments, the exemplary network 705 may provide network access, data transport and/or other services to any computing device coupled to it. In some embodiments, the exemplary network 705 may include and implement at least one specialized network architecture that may be based at least in part on one or more standards set by, for example, without limitation, GlobalSystem for Mobile communication (GSM) Association, the Internet Engineering Task Force (IETF), and the Worldwide Interoperability for Microwave Access (WiMAX) forum. In some embodiments, the exemplary network 705 may implement one or more of a GSM architecture, a General Packet Radio Service (GPRS) architecture, a Universal Mobile Telecommunications System (UMTS) architecture, and an evolution of UMTS referred to as Long Term Evolution (LTE). In some embodiments, the exemplary network 705 may include and implement, as an alternative or in conjunction with one or more of the above, a WiMAX architecture defined by the WiMAX forum. In some embodiments and, optionally, in combination of any embodiment described above or below, the exemplary network 705 may also include, for instance, at least one of a local area network (LAN), a wide area network (WAN), the Internet, a virtual LAN (VLAN), an enterprise LAN, a layer 3 virtual private network (VPN), an enterprise IP network, or any combination thereof. In some embodiments and, optionally, in combination of any embodiment described above or below, at least one computer network communication over the exemplary network 705 may be transmitted based at least in part on one of more communication modes such as but not limited to: NFC, RFID, Narrow Band Internet of Things (NBIOT), ZigBee, 3G, 4G, 5G, GSM, GPRS, WiFi, WiMax, CDMA, satellite and any combination thereof. In some embodiments, the exemplary network 705 may also include mass storage, such as network attached storage (NAS), a storage area network (SAN), a content delivery network (CDN) or other forms of computer- or machine-readable media.

In some embodiments, the exemplary server 706 or the exemplary server 707 may be a web server (or a series of servers) running a network operating system, examples of which may include but are not limited to Microsoft Windows Server, Novell NetWare, or Linux. In some embodiments, the exemplary server 706 or the exemplary server 707 may be used for and/or provide cloud and/or network computing. Although not shown in FIG. 6, in some embodiments, the exemplary server 706 or the exemplary server 707 may have connections to external systems like email, SMS messaging, text messaging, ad content providers, etc. Any of the features of the exemplary server 706 may be also implemented in the exemplary server 707 and vice versa.

In some embodiments, one or more of the exemplary servers 706 and 707 may be specifically programmed to perform, in non-limiting example, as authentication servers, search servers, email servers, social networking services servers, SMS servers, IM servers, MMS servers, exchange servers, photo-sharing services servers, advertisement providing servers, financial/banking-related services servers, travel services servers, or any similarly suitable service-base servers for users of the member computing devices 701-704.

In some embodiments and, optionally, in combination of any embodiment described above or below, for example, one or more exemplary computing member devices 702-704, the exemplary server 706, and/or the exemplary server 707 may include a specifically programmed software module that may be configured to send, process, and receive information using a scripting language, a remote procedure call, an email, a tweet, Short Message Service (SMS), Multimedia Message Service (MMS), instant messaging (IM), internet relay chat (IRC), mIRC, Jabber, an application programming interface, Simple Object Access Protocol (SOAP) methods, Common Object Request Broker Architecture (CORBA), HTTP (Hypertext Transfer Protocol), REST (Representational State Transfer), or any combination thereof.

FIG. 7 depicts a block diagram of another exemplary computer-based system/platform 800 in accordance with one or more embodiments of the present disclosure. However, not all of these components may be required to practice one or more embodiments, and variations in the arrangement and type of the components may be made without departing from the spirit or scope of various embodiments of the present disclosure. In some embodiments, the member computing devices (e.g., POS devices) 802a, 802b through 802n shown each at least includes computer-readable media, such as a random-access memory (RAM) 808 coupled to a processor 810 and/or memory 808. In some embodiments, the processor 810 may execute computer-executable program instructions stored in memory 808. In some embodiments, the processor 810 may include a microprocessor, an ASIC, and/or a state machine. In some embodiments, the processor 810 may include, or may be in communication with, media, for example computer-readable media, which stores instructions that, when executed by the processor 810, may cause the processor 810 to perform one or more steps described herein. In some embodiments, examples of computer-readable media may include, but are not limited to, an electronic, optical, magnetic, or other storage or transmission device capable of providing a processor, such as the processor 810 of client 802a, with computer-readable instructions. In some embodiments, other examples of suitable media may include, but are not limited to, solid state memory, CD-ROM, DVD, magnetic disk, any other disk-based memory, memory chip, ROM, RAM, an ASIC, a configured processor, all optical media, all magnetic tape or other magnetic media, or any other media from which a computer processor can read instructions. Also, various other forms of computer-readable media may transmit or carry instructions to a computer, including a router, private or public network, or other transmission device or channel, both wired and wireless. In some embodiments, the instructions may comprise code from any computer-programming language, including, for example, C, C++, Visual Basic, Java, Python, Perl, JavaScript, and etc.

In some embodiments, member computing devices 802a through 802n may also comprise a number of external or internal devices such as a mouse, a CD-ROM, DVD, a physical or virtual keyboard, a display, a speaker, or other input or output devices. In some embodiments, examples of member computing devices 802a through 802n (e.g., clients) may be any type of processor-based platforms that are connected to a network 806 such as, without limitation, personal computers, personal computing devices, smart phones, pagers, tablets, laptop computers, Internet appliances, and other processor-based devices. In some embodiments, member computing devices 802a through 802n may be specifically programmed with one or more application programs in accordance with one or more principles/methodologies detailed herein. In some embodiments, member computing devices 802a through 802n may operate on any operating system capable of supporting a browser or browser-enabled application, such as Microsoft^{™}, Windows^{™}, and/or Linux. In some embodiments, member computing devices 802a through 802n shown may include, for example, personal computers executing a browser application program such as Microsoft Corporation's Internet Explorer^{™}, Apple Computer, Inc.'s Safari^{™}, Mozilla Firefox, and/or Opera. In some embodiments, through the member computing client devices 802a through 802n, users, 812a through 812n, may communicate over the exemplary network 806 with each other and/or with other systems and/or devices coupled to the network 806. As shown in FIG. 7, exemplary server devices 804 and 813 may be also coupled to the network 806. In some embodiments, one or more member computing devices 802a through 802n may be mobile clients.

In some embodiments, at least one database of exemplary databases 807 and 815 may be any type of database, including a database managed by a database management system (DBMS). In some embodiments, an exemplary DBMS-managed database may be specifically programmed as an engine that controls organization, storage, management, and/or retrieval of data in the respective database. In some embodiments, the exemplary DBMS-managed database may be specifically programmed to provide the ability to query, backup and replicate, enforce rules, provide security, compute, perform change and access logging, and/or automate optimization. In some embodiments, the exemplary DBMS-managed database may be chosen from Oracle database, IBM DB2, Adaptive Server Enterprise, FileMaker, Microsoft Access, Microsoft SQL Server, MySQL, PostgreSQL, and a NoSQL implementation. In some embodiments, the exemplary DBMS-managed database may be specifically programmed to define each respective schema of each database in the exemplary DBMS, according to a particular database model of the present disclosure which may include a hierarchical model, network model, relational model, object model, or some other suitable organization that may result in one or more applicable data structures that may include fields, records, files, and/or objects. In some embodiments, the exemplary DBMS-managed database may be specifically programmed to include metadata about the data that is stored.

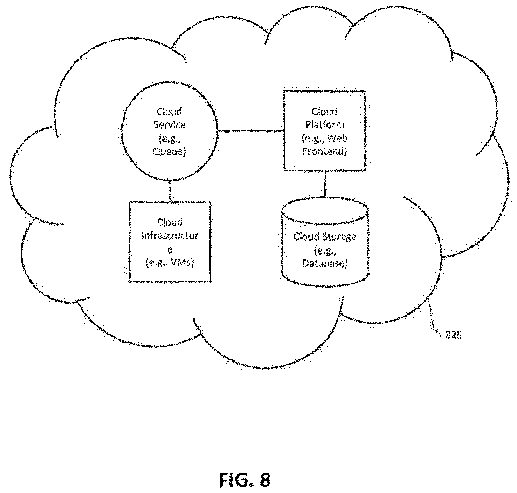

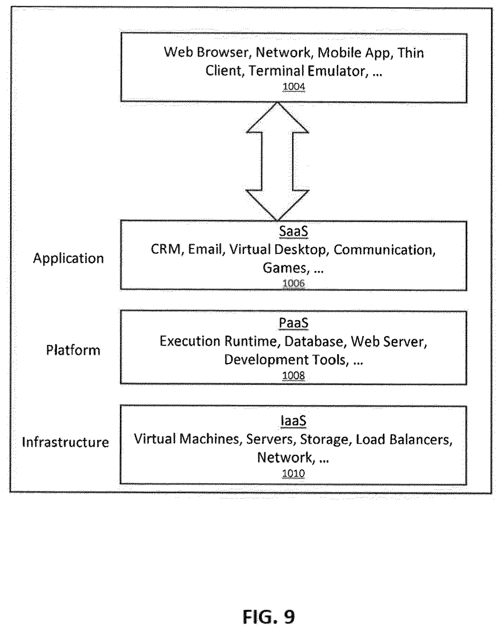

As also shown in FIGS. 8 and 9, some embodiments of the disclosed technology may also include and/or involve one or more cloud components 825, which are shown grouped together in the drawing for sake of illustration, though may be distributed in various ways as known in the art. Cloud components 825 may include one or more cloud services such as software applications (e.g., queue, etc.), one or more cloud platforms (e.g., a Web front-end, etc.), cloud infrastructure (e.g., virtual machines, etc.), and/or cloud storage (e.g., cloud databases, etc.).

According to some embodiments shown by way of one example in FIG. 9, the exemplary inventive computer-based systems/platforms, the exemplary inventive computer-based devices, components and media, and/or the exemplary inventive computer-implemented methods of the present disclosure may be specifically configured to operate in or with cloud computing/architecture such as, but not limiting to: infrastructure a service (IaaS) 1010, platform as a service (PaaS) 1008, and/or software as a service (SaaS) 1006. FIGs. 8 and 9 illustrate schematics of exemplary implementations of the cloud computing/architecture(s) in which the exemplary inventive computer-based systems/platforms, the exemplary inventive computer-implemented methods, and/or the exemplary inventive computer-based devices, components and/or media of the present disclosure may be specifically configured to operate. In some embodiments, such cloud architecture 1006, 1008, 1010 may be utilized in connection with the Web browser and other network aspects, shown at 1004, to achieve the innovations herein.

As used in the description and in any claims, the term "based on" is not exclusive and allows for being based on additional factors not described, unless the context clearly dictates otherwise. In addition, throughout the specification, the meaning of "a," "an," and "the" include plural references. The meaning of "in" includes "in" and "on."

It is understood that at least one aspect/functionality of various embodiments described herein can be performed in real-time and/or dynamically. As used herein, the term "real-time" may be directed to an event/action that can occur instantaneously or almost instantaneously in time when another event/action has occurred. For example, the "real-time processing," "real-time computation," and "real-time execution" all pertain to the performance of a computation during the actual time that the related physical process (e.g., a user interacting with an application on a mobile device) occurs, in order that results of the computation can be used in guiding the physical process.

As used herein, the term "dynamically" and term "automatically," and their logical and/or linguistic relatives and/or derivatives, mean that certain events and/or actions can be triggered and/or occur without any human intervention. In some embodiments, events and/or actions in accordance with the present disclosure can be in real-time and/or based on a predetermined periodicity of at least one of: nanosecond, several nanoseconds, millisecond, several milliseconds, second, several seconds, minute, several minutes, hourly, several hours, daily, several days, weekly, monthly, etc.

As used herein, the term "runtime" corresponds to any behavior that may be dynamically determined during an execution of a software application or at least a portion of software application.

In some embodiments, exemplary inventive, specially programmed computing systems/platforms with associated devices are configured to operate in the distributed network environment, communicating with one another over one or more suitable data communication networks (e.g., the Internet, satellite, etc.) and utilizing one or more suitable data communication protocols/modes such as, without limitation, IPX/SPX, X.25, AX.25, AppleTalk(TM), TCP/IP (e.g., HTTP), Bluetooth^{™}, near-field wireless communication (NFC), RFID, Narrow Band Internet of Things (NBIOT), 3G, 4G, 5G, GSM, GPRS, WiFi, WiMax, CDMA, satellite, ZigBee, and other suitable communication modes. Various embodiments herein may include interactive posters that involve wireless, e.g., Bluetooth^{™} and/or NFC, communication aspects, as set forth in more detail further below. In some embodiments, the NFC can represent a short-range wireless communications technology in which NFC-enabled devices are "swiped," "bumped," "tap" or otherwise moved in close proximity to communicate. In some embodiments, the NFC could include a set of short-range wireless technologies, typically requiring a distance of 10 cm or less. In some embodiments, the NFC may operate at 13.56 MHz on ISO/IEC 18000-3 air interface and at rates ranging from 106 kbit/s to 424 kbit/s. In some embodiments, the NFC can involve an initiator and a target; the initiator actively generates an RF field that can power a passive target. In some embodiments, this can enable NFC targets to take very simple form factors such as tags, stickers, key fobs, or cards that do not require batteries. In some embodiments, the NFC's peer-to-peer communication can be conducted when a plurality of NFC-enable devices (e.g., smartphones) are within close proximity of each other.

The material disclosed herein may be implemented in software or firmware or a combination of them or as instructions stored on a machine-readable medium, which may be read and executed by one or more processors. A machine-readable medium may include any medium and/or mechanism for storing or transmitting information in a form readable by a machine (e.g., a computing device). For example, a machine-readable medium may include read only memory (ROM); random access memory (RAM); magnetic disk storage media; optical storage media; flash memory devices; electrical, optical, acoustical or other forms of propagated signals (e.g., carrier waves, infrared signals, digital signals, etc.), and others.

As used herein, the terms "computer engine" and "engine" identify at least one software component and/or a combination of at least one software component and at least one hardware component which are designed/programmed/configured to manage/control other software and/or hardware components (such as the libraries, software development kits (SDKs), objects, etc.).

Examples of hardware elements may include processors, microprocessors, circuits, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), logic gates, registers, semiconductor device, chips, microchips, chip sets, and so forth. In some embodiments, the one or more processors may be implemented as a Complex Instruction Set Computer (CISC) or Reduced Instruction Set Computer (RISC) processors; x86 instruction set compatible processors, multi-core, or any other microprocessor or central processing unit (CPU). In various implementations, the one or more processors may be dual-core processor(s), dual-core mobile processor(s), and so forth.

Examples of software may include software components, programs, applications, computer programs, application programs, system programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. Determining whether an embodiment may be implemented using hardware elements and/or software elements may vary in accordance with any number of factors, such as desired computational rate, power levels, heat tolerances, processing cycle budget, input data rates, output data rates, memory resources, data bus speeds and other design or performance constraints.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that make the logic or processor. Of note, various embodiments described herein may, of course, be implemented using any appropriate hardware and/or computing software languages (e.g., C++, Objective-C, Swift, Java, JavaScript, Python, Perl, QT, etc.).

In some embodiments, one or more of exemplary inventive computer-based systems/platforms, exemplary inventive computer-based devices, and/or exemplary inventive computer-based components of the present disclosure may include or be incorporated, partially or entirely into at least one personal computer (PC), laptop computer, ultra-laptop computer, tablet, touch pad, portable computer, handheld computer, palmtop computer, personal digital assistant (PDA), cellular telephone, combination cellular telephone/PDA, television, smart device (e.g., smart phone, smart tablet or smart television), mobile internet device (MID), messaging device, data communication device, and so forth.

As used herein, the term "server" should be understood to refer to a service point which provides processing, database, and communication facilities. By way of example, and not limitation, the term "server" can refer to a single, physical processor with associated communications and data storage and database facilities, or it can refer to a networked or clustered complex of processors and associated network and storage devices, as well as operating software and one or more database systems and application software that support the services provided by the server. Cloud components (e.g., FIG. 8-9) and cloud servers are examples.

In some embodiments, as detailed herein, one or more of exemplary inventive computer-based systems/platforms, exemplary inventive computer-based devices, and/or exemplary inventive computer-based components of the present disclosure may obtain, manipulate, transfer, store, transform, generate, and/or output any digital object and/or data unit (e.g., from inside and/or outside of a particular application) that can be in any suitable form such as, without limitation, a file, a contact, a task, an email, a tweet, a map, an entire application (e.g., a calculator), etc. In some embodiments, as detailed herein, one or more of exemplary inventive computer-based systems/platforms, exemplary inventive computer-based devices, and/or exemplary inventive computer-based components of the present disclosure may be implemented across one or more of various computer platforms such as, but not limited to: (1) AmigaOS, AmigaOS 4; (2) FreeBSD, NetBSD, OpenBSD; (3) Linux; (4) Microsoft Windows; (5) OpenVMS; (6) OS X (Mac OS); (7) OS/2; (8) Solaris; (9) Tru64 UNIX; (10) VM; (11) Android; (12) Bada; (13) BlackBerry OS; (14) Firefox OS; (15) Ios; (16) Embedded Linux; (17) Palm OS; (18) Symbian; (19) Tizen; (20) WebOS; (21) Windows Mobile; (22) Windows Phone; (23) Adobe AIR; (24) Adobe Flash; (25) Adobe Shockwave; (26) Binary Runtime Environment for Wireless (BREW); (27) Cocoa (API); (28) Cocoa Touch; (29) Java Platforms; (30) JavaFX; (31) JavaFX Mobile; (32) Microsoft XNA; (33) Mono; (34) Mozilla Prism, XUL and XULRunner; (35) .NET Framework; (36) Silverlight; (37) Open Web Platform; (38) Oracle Database; (39) Qt; (40) SAP NetWeaver; (41) Smartface; (42) Vexi; and (43) Windows Runtime.

In some embodiments, exemplary inventive computer-based systems/platforms, exemplary inventive computer-based devices, and/or exemplary inventive computer-based components of the present disclosure may be configured to utilize hardwired circuitry that may be used in place of or in combination with software instructions to implement features consistent with principles of the disclosure. Thus, implementations consistent with principles of the disclosure are not limited to any specific combination of hardware circuitry and software. For example, various embodiments may be embodied in many different ways as a software component such as, without limitation, a stand-alone software package, a combination of software packages, or it may be a software package incorporated as a "tool" in a larger software product.

For example, exemplary software specifically programmed in accordance with one or more principles of the present disclosure may be downloadable from a network, for example, a website, as a stand-alone product or as an add-in package for installation in an existing software application. For example, exemplary software specifically programmed in accordance with one or more principles of the present disclosure may also be available as a client-server software application, or as a web-enabled software application. For example, exemplary software specifically programmed in accordance with one or more principles of the present disclosure may also be embodied as a software package installed on a hardware device.

In some embodiments, exemplary inventive computer-based systems/platforms, exemplary inventive computer-based devices, and/or exemplary inventive computer-based components of the present disclosure may be configured to output to distinct, specifically programmed graphical user interface implementations of the present disclosure (e.g., a desktop, a web app., etc.). In various implementations of the present disclosure, a final output may be displayed on a displaying screen which may be, without limitation, a screen of a computer, a screen of a mobile device, or the like. In various implementations, the display may be a holographic display. In various implementations, the display may be a transparent surface that may receive a visual projection. Such projections may convey various forms of information, images, and/or objects. For example, such projections may be a visual overlay for a mobile augmented reality (MAR) application.

In some embodiments, exemplary inventive computer-based systems/platforms, exemplary inventive computer-based devices, and/or exemplary inventive computer-based components of the present disclosure may be configured to be utilized in various applications which may include, but not limited to, gaming, mobile-device games, video chats, video conferences, live video streaming, video streaming and/or augmented reality applications, mobile-device messenger applications, and others similarly suitable computer-device applications.

As used herein, the term "mobile electronic device," or the like, may refer to any portable electronic device that may or may not be enabled with location tracking functionality (e.g., MAC address, Internet Protocol (IP) address, or the like). For example, a mobile electronic device can include, but is not limited to, a mobile phone, Personal Digital Assistant (PDA), Blackberry ^{™}, Pager, Smartphone, smart watch, or any other reasonable mobile electronic device.

As used herein, the terms "proximity detection," "locating," "location data," "location information," and "location tracking" refer to any form of location tracking technology or locating method that can be used to provide a location of, for example, a particular computing device/system/platform of the present disclosure and/or any associated computing devices, based at least in part on one or more of the following techniques/devices, without limitation: accelerometer(s), gyroscope(s), Global Positioning Systems (GPS); GPS accessed using Bluetooth^{™}; GPS accessed using any reasonable form of wireless and/or non-wireless communication; WiFi^{™} server location data; Bluetooth ^{™} based location data; triangulation such as, but not limited to, network based triangulation, WiFi^{™} server information based triangulation, Bluetooth^{™} server information based triangulation; Cell Identification based triangulation, Enhanced Cell Identification based triangulation, Uplink-Time difference of arrival (U-TDOA) based triangulation, Time of arrival (TOA) based triangulation, Angle of arrival (AOA) based triangulation; techniques and systems using a geographic coordinate system such as, but not limited to, longitudinal and latitudinal based, geodesic height based, Cartesian coordinates based; Radio Frequency Identification such as, but not limited to, Long range RFID, Short range RFID; using any form of RFID tag such as, but not limited to active RFID tags, passive RFID tags, battery assisted passive RFID tags; or any other reasonable way to determine location. For ease, at times the above variations are not listed or are only partially listed; this is in no way meant to be a limitation.

As used herein, the terms "cloud," "Internet cloud," "cloud computing," "cloud architecture," and similar terms correspond to at least one of the following: (1) a large number of computers connected through a real-time communication network (e.g., Internet); (2) providing the ability to run a program or application on many connected computers (e.g., physical machines, virtual machines (VMs)) at the same time; (3) network-based services, which appear to be provided by real server hardware, and are in fact served up by virtual hardware (e.g., virtual servers), simulated by software running on one or more real machines (e.g., allowing to be moved around and scaled up (or down) on the fly without affecting the end user).

The aforementioned examples are, of course, illustrative and not restrictive.

As used herein, the term "user" shall have a meaning of at least one user. In some embodiments, the terms "user", "subscriber", "consumer", or "customer" should be understood to refer to a user of an application or applications as described herein and/or a consumer of data supplied by a data provider. By way of example, and not limitation, the terms "user" or "subscriber" can refer to a person who receives data provided by the data or service provider over the Internet in a browser session, or can refer to an automated software application which receives the data and stores or processes the data.

At least some aspects of the present disclosure will now be described with reference to the following numbered clauses.

Clause 1. A method including:
detecting, by one or more processors, a triggering condition associated with a user accessing an account at a location, the triggering condition pertaining to an activity of the user to access the account;
initiating, by the one or more processors and in response to detecting the triggering condition, a current authentication-authorization session based on account information of the account, the current authentication-authorization session including an ordered set of endpoints dictating a sequence of computer session interactions to be performed to complete a transaction during the current authentication-authorization session, and session data including: a session timestamp, location information of the location, and the account information of the account;
receiving, by the one or more processors, service provider information of a service provider associated with the transaction, the service provider information including service provider venue information for the location and service provider identity information;
updating, by the one or more processors, the session data of the current authentication-authorization session based on the service provider information;
receiving, by the one or more processors, a transaction request to perform the transaction from an application (app) running on a computing device operated by the user;
updating, by the one or more processors, the session data of the current authentication-authorization session with the transaction request;
determining, by the one or more processors, a transaction risk level based on the session data of the current authentication-authorization session and at least one prior authentication-authorization session of the user;
instructing, based on the transaction risk level, the app to initiate one or more authentication procedures, where the one or more authentication procedures is/are determined based on one or more of: a database of legitimate transactions at the location (e.g., available, authorized, and/or approved transactions that a customer may be allowed to perform at a particular branch location, etc.), a database of historical transactions of the user, and a database of fraudulent transactions;
determining, by the one or more processors, one or more authentication procedures to authenticate the user;
selecting, by the one or more processors, at least one authentication mechanism from a software library of authentication mechanisms based on the one or more authentication procedures;
utilizing, by the one or more processors, the at least one authentication mechanism to authenticate the user in accordance with the one or more authentication procedures;
enabling, by the one or more processors, when the user has been authenticated, the app to proceed to perform the transaction; and
concluding, by the one or more processors, the authentication-authorization session upon the completion of the transaction, the session data further updated with the one or more authentication procedures and transaction details of the completed transaction.

Clause 2. The method of clause 1, where the enabling the app to proceed to perform the transaction includes:
authorizing, by the one or more processors, a point-of-sale (POS) device of the operator at the location to perform the transaction for the user.

Clause 3. The method of clause 1, where authenticating-authorizing, by the one or more processors, the user based on the one or more authentication procedure includes:
invoking, by the one or more processors, one or more biometric feature-based authentication mechanisms, and
communicating, by the one or more processors, with a server of an identity verification supplier.

Clause 4. The method of clause 1, where the determining, by the one or more processors, whether the transaction may be risky includes determining a risk level associated with the transaction based at least in part on a transaction policy.

Clause 5. The method of clause 1, where the detecting the triggering condition includes one or more of:
detecting a physical presence of the user at the location based on one or both of: a NFC signal of a mobile device of the user, and geo-location of the user, the user visiting the location to perform one or more transactions with the account;
receiving user check in information upon scanning a QR code generated at a mobile device of the user;
receiving user check in information upon scanning an identification card of the user;
receiving user check in information upon scanning a transaction card and a PIN of the user; and
receiving credential information that authenticates the user to login for access to the account of the user.

Clause 6. The method of clause 5, further including:
establishing a machine learning model using data associated with the authentication-authorization session; and
predicting the one or more authentication procedures using the machine learning model.

Clause 7. The method of clause 1, where the software library of authentication mechanisms includes a software plug-and-play library, and the at least one authentication mechanism selected includes a plug-and-play mechanism.

Clause 8. One or more non-transitory computer-readable media storing instructions that, when executed by at least one processor, cause the at least one processor to perform operations including:
detecting, by one or more processors, a triggering condition associated with a user accessing an account at a location, the triggering condition pertaining to an activity of the user to access the account;
initiating, by the one or more processors and in response to detecting the triggering condition, a current authentication-authorization session based on account information of the account, the current authentication-authorization session including an ordered set of endpoints dictating a sequence of computer session interactions to be performed to complete a transaction during the current authentication-authorization session, and session data including: a session timestamp, location information of the location, and the account information of the account;
processing, by the one or more processors, service provider information of a service provider associated with the transaction, the service provider information including service provider venue information for the location and service provider identity information;
updating, by the one or more processors, the session data of the current authentication-authorization session based on the service provider information;
receiving, by the one or more processors, a transaction request to perform the transaction from an application (app) running on a computing device operated by the user;
updating, by the one or more processors, the session data of the current authentication-authorization session with the transaction request;
determining, by the one or more processors, a transaction risk level based on the session data of the current authentication-authorization session and at least one prior authentication-authorization session of the user;
instructing, based on the transaction risk level, the app to initiate one or more authentication procedures, where the one or more authentication procedures is/are determined based on one or more of: a database of legitimate transactions at the location, a database of historical transactions of the user, and a database of fraudulent transactions;
determining, by the one or more processors, one or more authentication procedures to authenticate the user;
selecting, by the one or more processors, at least one authentication mechanism from a software library of authentication mechanisms based on the one or more authentication procedures;
utilizing, by the one or more processors, the at least one authentication mechanism to authenticate the user in accordance with the one or more authentication procedures;
enabling, by the one or more processors, when the user has been authenticated, the app to proceed to perform the transaction; and
concluding, by the one or more processors, the authentication-authorization session upon the completion of the transaction, the session data further updated with the one or more authentication procedures and transaction details of the completed transaction.

Clause 9. The computer-readable media of clause 8, where the enabling the app to proceed to perform the transaction includes:
authorizing, by the one or more processors, a point-of-sale (POS) device of the operator at the location to perform the transaction for the user.

Clause 10. The computer-readable media of clause 8, where authenticating/authorizing, by the one or more processors, the user based on the one or more authentication procedure includes:
invoking, by the one or more processors, one or more biometric feature-based authentication mechanisms, and
communicating, by the one or more processors, with a server of an identity verification supplier.

Clause 11. The computer-readable media of clause 8, where the determining, by the one or more processors, whether the transaction may be risky includes determining a risk level associated with the transaction based at least in part on a transaction policy.

Clause 12. The computer-readable media of clause 8, where the detecting the triggering condition includes one or more of:
detecting a physical presence of the user at the location based on one or both of: a NFC signal of a mobile device of the user, and geo-location of the user, the user visiting the location to perform one or more transactions with the account;
receiving user check in information upon scanning a QR code generated at a mobile device of the user;
receiving user check in information upon scanning an identification card of the user;
receiving user check in information upon scanning a transaction card and a PIN of the user; and
receiving credential information that authenticates the user to login for access to the account of the user.

Clause 13. The computer-readable media of clause 12, further including:
establishing a machine learning model using data associated with the authentication-authorization session; and
predicting the one or more authentication procedures using the machine learning model.

Clause 14. The computer-readable media of clause 8, where the software library of authentication mechanisms includes a software plug-and-play library, and the at least one authentication mechanism selected includes a plug-and-play mechanism.

Clause 15. A system including:
one or more computers; and
one or more non-transitory computer-readable media storing instructions that, when executed by at least one processor associated with or in communication with the one or more computers, cause the at least one processor to perform operations including:
   detecting, by one or more processors, a triggering condition associated with a user accessing an account at a location, the triggering condition pertaining to an activity of the user to access the account;
   initiating, by the one or more processors and in response to detecting the triggering condition, a current authentication-authorization session based on account information of the account, the current authentication-authorization session including an ordered set of endpoints dictating a sequence of computer session interactions to be performed to complete a transaction during the current authentication-authorization session, and session data including: a session timestamp, location information of the location, and the account information of the account;
   receiving, by the one or more processors, service provider information of a service provider associated with the transaction, the service provider information including service provider venue information for the location and service provider identity information;
   updating, by the one or more processors, the session data of the current authentication-authorization session based on the service provider information;
   receiving, by the one or more processors, a transaction request to perform the transaction from an application (app) running on a computing device operated by the user;
   updating, by the one or more processors, the session data of the current authentication-authorization session with the transaction request;
   determining, by the one or more processors, a transaction risk level based on the session data of the current authentication-authorization session and at least one prior authentication-authorization session of the user;
   instructing, based on the transaction risk level, the app to initiate one or more authentication procedures, where the one or more authentication procedures is/are determined based on one or more of: a database of legitimate transactions at the location, a database of historical transactions of the user, and a database of fraudulent transactions;
   determining, by the one or more processors, one or more authentication procedures to authenticate the user;
   selecting, by the one or more processors, at least one authentication mechanism from a software library of authentication mechanisms based on the one or more authentication procedures;
   utilizing, by the one or more processors, the at least one authentication mechanism to authenticate the user in accordance with the one or more authentication procedures;
   enabling, by the one or more processors, when the user has been authenticated, the app to proceed to perform the transaction; and
   concluding, by the one or more processors, the authentication-authorization session upon the completion of the transaction, the session data further updated with the one or more authentication procedures and transaction details of the completed transaction.

Clause 16. The system of clause 15, where the enabling the app to proceed to perform the transaction includes:
authorizing, by the one or more processors, a point-of-sale (POS) device of the operator at the location to perform the transaction for the user.

Clause 17. The system of clause 15, where authenticating/authorizing, by the one or more processors, the user based on the one or more authentication procedure includes:
invoking, by the one or more processors, one or more biometric feature-based authentication mechanisms, and
communicating, by the one or more processors, with a server of an identity verification supplier.

Clause 18. The system of clause 15, where the determining, by the one or more processors, whether the transaction may be risky includes determining a risk level associated with the transaction based at least in part on a transaction policy.

Clause 19. The system of clause 15, where the detecting the triggering condition includes one or more of:
detecting a physical presence of the user at the location based on one or both of: a NFC signal of a mobile device of the user, and geo-location of the user, the user visiting the location to perform one or more transactions with the account;
receiving user check in information upon scanning a QR code generated at a mobile device of the user;
receiving user check in information upon scanning an identification card of the user;
receiving user check in information upon scanning a transaction card and a PIN of the user; and
receiving credential information that authenticates the user to login for access to the account of the user.

Clause 20. The system of clause 15, where the instructions cause the at least one processor to perform operations further including:
establishing a machine learning model using data associated with the authentication-authorization session; and
predicting the one or more authentication procedures using the machine learning model.

While one or more embodiments of the present disclosure have been described, it is understood that these embodiments are illustrative only, and not restrictive, and that many modifications may become apparent to those of ordinary skill in the art, including that various embodiments of the inventive methodologies, the inventive systems/platforms, and the inventive devices described herein can be utilized in any combination with each other. Further still, the various steps may be carried out in any desired order (and any desired steps may be added and/or any desired steps may be eliminated).

## Claims

1. A method comprising:
detecting, by one or more processors, a triggering condition associated with a user accessing an account at a location, the triggering condition pertaining to an activity of the user to access the account;
initiating, by the one or more processors and in response to detecting the triggering condition, a current authentication-authorization session based on account information of the account, the current authentication-authorization session comprising an ordered set of endpoints dictating a sequence of computer session interactions to be performed to complete a transaction during the current authentication-authorization session, and session data comprising: a session timestamp, location information of the location, and the account information of the account;
receiving, by the one or more processors, service provider information of a service provider associated with the transaction, the service provider information comprising service provider venue information for the location and service provider identity information;
updating, by the one or more processors, the session data of the current authentication-authorization session based on the service provider information;
receiving, by the one or more processors, a transaction request to perform the transaction from an application (app) running on a computing device operated by the user;
updating, by the one or more processors, the session data of the current authentication-authorization session with the transaction request;
determining, by the one or more processors, a transaction risk level based on the session data of the current authentication-authorization session and at least one prior authentication-authorization session of the user;
instructing, based on the transaction risk level, the app to initiate one or more authentication procedures, wherein the one or more authentication procedures is/are determined based on one or more of: a database of legitimate transactions at the location, a database of historical transactions of the user, and a database of fraudulent transactions;
determining, by the one or more processors, one or more authentication procedures to authenticate the user;
selecting, by the one or more processors, at least one authentication mechanism from a software library of authentication mechanisms based on the one or more authentication procedures;
utilizing, by the one or more processors, the at least one authentication mechanism to authenticate the user in accordance with the one or more authentication procedures;
enabling, by the one or more processors, when the user has been authenticated, the app to proceed to perform the transaction; and
concluding, by the one or more processors, the authentication-authorization session upon the completion of the transaction, the session data further updated with the one or more authentication procedures and transaction details of the completed transaction.

2. The method of claim 1, wherein the enabling the app to proceed to perform the transaction comprises:
authorizing, by the one or more processors, a point-of-sale (POS) device of the operator at the location to perform the transaction for the user.

3. The method of claim 1 or 2, wherein authenticating/authorizing, by the one or more processors, the user based on the one or more authentication procedure comprises:
invoking, by the one or more processors, one or more biometric feature-based authentication mechanisms, and
communicating, by the one or more processors, with a server of an identity verification supplier.

4. The method of any preceding claim, wherein the determining, by the one or more processors, whether the transaction is risky comprises determining a risk level associated with the transaction based at least in part on a transaction policy.

5. The method of any preceding claim, wherein the detecting the triggering condition comprises one or more of:
detecting a physical presence of the user at the location based on one or both of: a NFC signal of a mobile device of the user, and geo-location of the user, the user visiting the location to perform one or more transactions with the account;
receiving user check in information upon scanning a QR code generated at a mobile device of the user;
receiving user check in information upon scanning an identification card of the user;
receiving user check in information upon scanning a transaction card and a PIN of the user; and
receiving credential information that authenticates the user to login for access to the account of the user.

6. The method of claim 5, further comprising:
establishing a machine learning model using data associated with the authentication-authorization session; and
predicting the one or more authentication procedures using the machine learning model.

7. The method of any preceding claim, wherein the software library of authentication mechanisms comprises a software plug-and-play library, and the at least one authentication mechanism selected comprises a plug-and-play mechanism.

8. A computer program comprising instructions that, when executed by at least one processor, cause the at least one processor to perform a method according to any preceding claim.

9. One or more non-transitory computer-readable media storing the computer program according to claim 8.

10. A system comprising:
one or more computers; and
one or more non-transitory computer-readable media storing instructions that, when executed by at least one processor associated with or in communication with the one or more computers, cause the at least one processor to perform a method according to any one of claims 1 to 7.
